Europäisches Patentamt

European Patent Office

Office européen des brevets

(11) Publication number: **0 113 446**
**A2**

# EUROPEAN PATENT APPLICATION

(21) Application number: **83112334.4**

(22) Date of filing: **08.12.83**

(51) Int. Cl.³: **H 04 N 7/13**

(30) Priority: **09.12.82 IT 6843982**

(43) Date of publication of application:
**18.07.84 Bulletin 84/29**

(84) Designated Contracting States:
**BE DE FR GB NL SE**

(71) Applicant: **CSELT Centro Studi e Laboratori
Telecomunicazioni S.p.A.
Via Guglielmo Reiss Romoli, 274
I-10148 Turin(IT)**

(72) Inventor: **Alaria, Gian Battista
C.so Turati 3
Turin(IT)**

(72) Inventor: **Destefanis, Paolo
P.za Adriano 9
Turin(IT)**

(72) Inventor: **Poggio, Cesare
C.so Raffaello 24
Turin(IT)**

(74) Representative: **Riederer Freiherr von Paar zu Schönau,
Anton et al,
Freyung 615 Postfach 2664
D-8300 Landshut(DE)**

(54) **Encoder and decoder of variable-length messages for data transmission systems.**

(57) Variable-length message encoder, apt to operate on digital signals, endowed with reduction codes and synchronism signals, to effect a redundancy reduction, and message decoder, apt to separate and expand the above signals, after extracting them from parallel data blocks, obtained from a flow transmitted via a digital channel. The most significant figures are Figure 2 and Figure 4.

Fig 2

Fig 4

EP 0 113 446 A2

Frhr. Riederer v. Paar, Postfach 2664, D-8300 Landshut

CSELT
Centro Studi e Laboratori
Telecomunicazioni S.p.A.
Via Guglielmo Reiss Romoli, 274

I-10148 Torino

Partner in München:
**DIEHL & KRESSIN**
Dr. H. O. Diehl, Dr. H-R. Kressin
☎ München (089) 177061
Fax (089) 177461 (autom.)
Telex 5215145 Zeus d

"Encoder and Decoder of Variable-Length Messages
for Data Transmission Systems"

## Description

The present invention relates to devices for transmitting and receiving data via digital channels and more particularly it concerns an encoder and a decoder of variable-length messages.

It is known that when data derived from the encoding of analog signals are to be transmitted on a low-rate digital-channel, the signal to be transmitted is to undergo suitable redundancy-reductions or actual compressions, tolerating a certain degradation of the original signal. Vice-versa, when the signal presents a lower rate than that of the channel, one has to resort to the opposite procedure, by possibly repeating the same information many times.

These operations are effected by coding devices, associated with decoding devices present in the receiver, which reconstruct the original signal.

Due to the rate of the signal to be transmitted, which sometimes may be very high, microprogrammed logic circuits or wired logic circuits, specialized for the specific problem to be solved, are generally used. Thanks to their particular design, which is generally oriented to limit the functions carried out and to maintain only the essential functions, said circuits are sufficiently fast.

Yet, wired logics lack in flexibility. However, it is important to easily adapt the apparatus both when the signals to be processed are to be varied and when the apparatus is to be used for a different application.

A further problem arises when in the decoder a series of tests of sequential coherence is to be effected on the received information in order to eliminate, as far as possible, the errors introduced by the digital channel. Such errors, chiefly when the original signal is compressed, tend to be considerably amplified during decoding.

The present invention provides à process of encoding and decoding variable length messages, wherein the encoding is effected on a digital signal having redundancy codes and synchronism signals for driving line-interface circuits in order to effect the transmission in line code on a digital channel and wherein the decoding is effected on a flow of parallel data blocks, obtained from the serial data flow in line code transmitted on the channel, in order to recover the digital signal, the reduction codes and synchronism signals, by effecting suitable tests to check the received data correctness, characterized in that during the encoding, by using the reduction codes and the synchronism signals, corresponding signals are generated expressing the type and the quantity of incoming elementary information, comprising the digital signal, the reduction codes, functionning change indicators and information on the data to transmit, an alignment word is added to synchronize the decoder in the operations of acknowledgment of the digital flow received from the channel, afterwards the digital signals, the signals expressing the type and quantity of the elementary information and the alignment words are orderly memorized in the same arrival time sequence and transferred to line interface circuits each time a pre-determined number of them has been reached, forming said messages, and in the decoding, when requested by downstream circuits, a parallel data block is memorized, the block is converted into elementary information arranged in parallel and ordered as at the arrival, then the digital signal, the reduction codes and synchronism signals are separated in function of the kind and order of arrival of the present item of elementary information and of a number of previous ones, forming the variable-length message, their temporary memorization is effected to obviate the time discontinuity of the operations carried out by the upstream circuits with respect to the operations carried out by downstream circuits, interrupting the operations if the discontinuity exceeds a certain pre-determined value, using then the reduction codes both the digital information and the reduction codes themselves are expanded and the number of digital signals, obtained after the expansion and comprised between two successive synchronism signals, is checked to overcome reception errors. The devices implementing the process are also provided by the present invention. The foregoing and other characteristics of the present invention will be made clearer by the following description of a preferred embodiment thereof given by way of example and not in a limiting sense and by the annexed drawings in which:

- Fig. 1 is a general block diagram of an apparatus for transmitting compressed TV images;
- Fig. 2 is a block diagram of the message encoder, provided by the invention;
- Fig. 3 is a general block diagram of an apparatus for receiving compressed TV images;
- Fig. 4 is a block diagram of the message decoder, provided by the invention.

A particular example is now described in which the encoder is used to transmit on a digital channel (via radio-link or cable), a black and white TV signal together with the corresponding synchronism signals and the decoder is used to recover the original signal. The signal must be conveniently compressed so as to reduce the frequency-band occupied and its rate must be adequate to that of the channel.

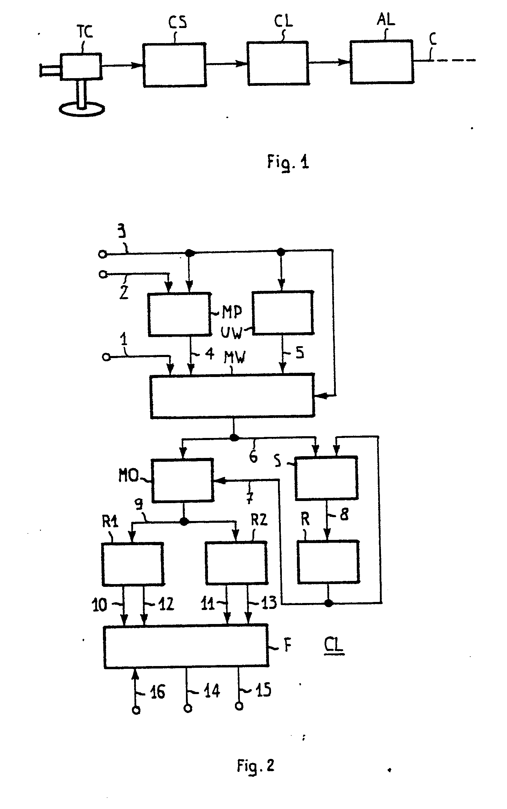

Fig. 1 represents a general block diagram of a video signal encoder, in which TC indicates a telecamera, the source of the signal to be transmitted. CS indicates a source encoder of a known type, which converts the analog signal into a digital signal and effects convenient reductions in redundant information.

By instance CS compares the different luminances of the points of a TV frame with those of the corresponding points of a previous frame and transmits just the information relating to the occurred variations.

In addition, as CS has to maintain an average flow on the channel, it operates with particular algorithms so as to limit or increase the quantity of information which is effected by transmitting a number of variations less than the actual ones or by re-transmitting the previous information.

Reference CL denotes the message encoder, provided by the invention, whose detailed block diagram will be given hereinafter.

CL is to operate on the information coming from CS, consisting of all the luminances of the frame points, of all the indications on the operations to be effected for luminance transmission, which will be hereinafter referred to as "reduction codes", and of the synchronisms, transmitting in a suitable form only the information CS considers necessary to the receiver.

Besides CL must transmit the synchronisms and periodically add to the serial flow a number of words which allow the receiver to correctly interpret the arriving data. Each item of said information is a variable-length message. Finally, AL indicates a circuit of known type which effects the line interfacing, by converting the information received from CL under parallel form into serial form information. It comprises a buffer memory, wherein there is stored the information supplied with discontinuity by CL, and a shift register which is periodically loaded with the memory data and read at the transmission rate of the channel denoted by C. Let us see now an example of the operations to be effected.

Telecamera TC supplies an analog signal of the image wherein a line differs by an initial portion (corresponding by instance to five points of a digital sampling) from the line of the previous frame and by a subsequent portion (corresponding by instance to ten points) is equal.

Source encoder CS emits in parallel via four wires the values of luminance variations and via other three wires the associated reduction code. Said reduction code has for the first five points the meaning of command of integral transmission of the luminance information and for the subsequent ten points has the meaning of the number of points whose luminance is not to be transmitted, since they are equal to the points of the same line of the preceding frame.

Line encoder CL emits for the first five points the corresponding luminance values, point by point, then, at the end of the subsequent points during which it has not been transmitting, it emits a suitable binary word to communicate the receiver the quantity of points which have remained unchanged.

The luminance words or the words above, in parallel form and by multiples of four bits, are then ordered in the format required of AL buffer memory (32 bits, equivalent to 8 elementary items of information) to be then emitted in serial form on channel C.

Block CL is shown in detail in Fig.2. Through 4-wire connection 1 the luminance values of the image points arrive from CS while the reduction codes arrive through 3-wire connection 2. Synchronism signals arrive through 5-wire connection 3.

MP denotes a recorded-microprogram read-only memory which is addressed by the signals present on connections 2 and 3 and generates at the output on connection 4 a number of signals with the meaning of quantity and type of the elementary items of information, which are present at that instant.

Said items may be in fact essentially of four kinds:

- luminance or luminance variations;
- indicators of change of operation, i.e. different type of reductions;
- reduction codes;
- the number of successive points which are not to be transmitted, as

0113446

they are equal to the corresponding ones of the previous frame.

UW denotes a multiplexer, two inputs of which are rigidly wired to two duly chosen binary configurations. The sequential transmission of these configurations generates a synchronism and alignment word, such that it allows the receiver to recognize the beginning of an item of information. This word in generated over wire 5 whenever the synchronism signal appears on wire 3.

MW denotes a second multiplexer, controlled by the same synchronism signal present on connection 3, which transfers to the output on connection 6 the synchronism word generated by UW or the luminance values and the signal generated by MP on connections 1 and 4.

The signals concerning the quantity of elementary information, present on connection 6, are lead to an adder S, where they are added to those corresponding to the quantity of elementary information stored in the preceding time interval in a register R. The resulting sum is stored in R through connection 8, and is available at the output on connection 7.

The signals concerning all the kinds of elementary information and on the quantity of the elementary information present on connection 6, are also lead to a multiplexer MO, controlled by the signal present on 3-wire connection 7.

MO is to order the elementary information (varying instant by instant from zero to four), with an associated validity indicator bit, coming from connection 6, arranging them in an ordered sequence on its eight outputs, each of four wires, comprised in connection 9.

When the eight items of elementary information appear on connection 9, they are sent to two registers R1 and R2, wherein they are stored four by four. When one of the registers above has stored its four items of information, it communicates them to a FIFO memory F through connection 10 or 11, and prepares to accept new information. The signal enabling F to the storage can arrive through wires 12 or 13, on which there is a level variation when at the input of the corresponding register the fourth item of elementary information appears together with the validity indicator bit.

After the transfer time typical of F, the eight items of elementary information appear at the output on connection 14, while the presence of the eight items of stored information is signalled by a level variation on wire 15.

The signal on this wire is used to inform the subsequent stages, comprised in block AL (Fig. 1), that the eight items of information are to be transferred. The actual transfer is acknowledged by a signal sent backwards on wire 16 by block AL, and as a consequence memory F loses the old information. If there is some new information, it is rendered available on connection 14 and signalled on wire 15.

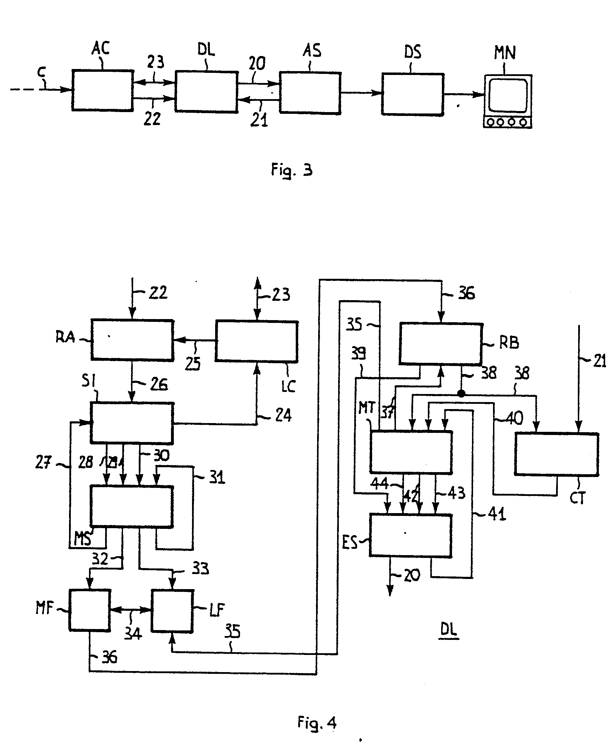

Fig. 3 shows a general block diagram of the video-signals decoder. C denotes the transmission channel and AC a circuit of known type which converts the serial flow arriving from the channel into a parallel-type flow. To effect this operation the circuit uses synchronism and alignment words introduced by the encoder. They are designed such as to be difficult to simulate due to transmission errors.

AC basically consists of a shift register, to the serial input of which the channel is connected. A comparator able to recognize the alignment information, even in presence of an erroneous bit, and to start the process of parallel data transfer towards a buffer memory, is connected to the parallel outputs. Said buffer memory is used to obviate the discontinuity with which the data are requested of the downstream circuits, while the channel supplies information with continuity. In fact, as a consequence of the equalization effected by the encoder, some data can give rise to long decoding operations, while the data which are meanwhile received are to be temporarily memorized. The output of this memory coincides with AC output connected to message encoder DL. DL, which is provided by the invention, will be described in greater detail hereinafter. The essential task of DL is to extract luminance values, reduction codes and video-signal synchronisms from the data flow supplied by AC. Then, it expands whenever requested and in a suitable way, luminance information and codes, according to a procedure opposite to that used in the encoder.

The expanded-information flow is present at the output connected to connection 20, while via connection 21 DL receives synchronism signals autonomously-generated by a time base present in AS. DL uses said synchronism signals, comparing them with those received from AC, to align the expanded information. AS denotes a circuit of known type, containing the time base for the whole decoder and a memory with a capacity sufficient for the storage of all the items of information of a TV line. This memory introduces towards the subsequent block the delay equivalent to a line in the video information, so as to overcome the negative effects of an error. In particular, if the presence of an error is detected at the end of the line, that error is signalled to downstream circuits and the picture represented on TV screen remains equal to the last picture correctly received. This technique is one of the most widely used to render the TV transmission less unpleasant in presence of errors.

DS denotes a source decoder of known type, able to transform the digital information supplied by AS, i.e. luminances, reduction codes and synchronisms, into analog signals. Besides it comprises a memory capable of storing the preceding frames to be used in presence of reduction codes requiring the regeneration of already-transmitted information The same procedure cán be used in presence of errors by continuously displaying the last correct picture. Finally MN denotes a TV monitor.

Fig. 4 shows the block diagram of the circuit denoted by DL in Fig. 3. The blocks of elementary information, extracted from the buffer memory of AC (Fig. 3) forming the variable length messages, arrive through 32-wire connection 22 and access a register RA. The transfer takes place under the control of a logic circuit LC, which receives through wire 24 the request of a new datum and effects through bidirectional connection 23 the usual data request dialogue with the buffer memory. In particular, after a request has appeared on wire 24 and a signal coming from the buffer memory acknowledges the transfer end, LC emits in turn the request on connection 23. The buffer memory presents the datum on connection 22 and immediately afterwards the enable signal for register RA, which stores the datum, through connection 23 and wire 25. Hence the eight elementary items of information, ordered in the same way as they have been transmit - ted appear on 32-wire connection 26 placed at RA output. They are temporarily stored by a serializing circuit SI and presented at the output by groups of three subsequent items. Upon a request sent by the circuit placed downstream through wire 27, the oldest of the three items of information is lost and is replaced by new information through a shifting operation. In this way the continuity of elementary information is assured to subsequent block MS, even during the time intervals used for the transfer from the buffer memory. SI basically consists of four shift registers with 32 parallel inputs and serial outputs, connected to four registers with a serial input and 3 parallel outputs, corresponding to three subsequent items of elementary information, available on four-wire connections 28, 29, 30. Block MS consists of a recorded-microprogram read-only memory and of an outgoing data register. The memory is addressed by the data present on already-described wires 28, 29 and 30, as well as by the signals on connection 31, correlated to the data supplied by SI during the previous time interval, and separately supplies luminance information, reduction codes, synchronisms and shift commands for SI. Its output is connected to the data register which is to clock the operations in the memory through connection 31.

Besides a series of tests on the correct sequence of the line codes is effected in MS. If a number of forbidden sequences occurs, that is due to the occurrence of errors introduced by the transmission channel: that is why suitable measures have to be taken in presenting the TV picture.

The output of the register contained in MS is connected to connection 32, which accesses the input of a FIFO memory MF having a capacity of 64 words. The aim of this memory is to assure the downstream circuits the continuous presence of data, they may need at non-predetermined instants for the expansion of the decoded information. Both the writing and reading of memory MF are controlled by logic circuit LF, which receives from MS via wire 33 the writing request and via connection 34 the confirmation of the existence of at last one free cell.

In this case, the transfer command is supplied to MF still through connection 34. Otherwise the operations are interrupted.

In the case a reading request arrives through wire 35, the circuit LF checks through connection 34 whether there is at least a written cell and, in the affirmative, it supplies MF with an "advance command", which causes a new datum to appear at the output connected to connection 36. This datum accesses a register RB, which transfers it to its outputs on connections 38 and 39, upon the command received through wire 37 from a recorded-microprogram read-only memory MT. More particularly reduction codes and synchronisms are present on connection 38 while luminance information is present on connection 39.

Aims of memory MT are:

- alignment of the flow of elementary information with the synchronism signals generated by block AS (Fig. 3) and transmitted through connection 21. In particular the alignment is effected by using the frame synchronism signal;

- the expansion control using the instructions obtained from the reduction codes;

- the test on the number of luminance values comprised between two successive line synchronism pulses, received from the channel, and of the number of line synchronism pulses comprised between two successive frame synchronism pulses, always received from the channel, to overcome transmission errors.

The signals on connection 38, arriving from RB, on connection 40, arriving from block CT, and on connection 41 arriving from block ES, address the memory MT, which supplies:

- at the output connected to connection 42 the reduction codes to be expanded, a number of which is equal to those present on connection 38 and others, in particular the error code, are internally generated;

- at the output connected to connection 43 a number of operative codes which, through block ES and connection 41, are used to address memory MT.

Block CT basically consisting of a comparator, receives at the input connection 21 the synchronisms generated in AS (Fig. 3) and the other connection 38 the synchronisms arriving from the channel. From the comparison CT extracts a signal it renders available on connection 40, which signal assumes a predetermined logic level if the synchronisms are in the time alignment condition. In this case the expansion function takes place as usual. On the contrary, when this condition has not occurred, through 40 CT interrupts the usual expansion sequence and starts the procedure for the recovery of channel synchronism in memory MT. Said type of operation takes place in particular at each start of the message decoder.

Block ES basically consists of a register, which is clocked by memory MT through connection 44. The task of ES is that of maintaining for the time pre-determined by the reduction codes the luminance signals and the reduction codes themselves at the output on connection 20. ES effects the actual expansion under the control of MT, keeping at its output for the appropriate elementary time intervals the signals to be supplied to block AS.

An example of operation of the message decoder in the starting phase is described hereinbelow with reference to Fig. 3.

Channel C supplies data, while block AC effects the random search for the synchronism and alignment word in the received flow. At the instant AC recognizes that word, it starts the operation of serial-to-parallel conversion of the flow and stores the received data in its buffer memory.

When the buffer memory is loaded up to a pre-determined level, dependent on channel rate and on the dynamic characteristics of TV picture, its reading is enabled by block DL through connection 23. DL extracts the data at the maximum internal speed searching for the first signal of frame synchronism. At the recognition DL waits for AS to present the frame synchronism signal locally generated through connection 21 and then starts the decoding and returns the data to block AS through connection 20. AS supplies DS with the data associated with the internally-generated video synchronisms.

In the above mentioned search phase for the alignment condition, block DL supplies on connection 20 a particular reduction code which signals the error. In turn AS transmits said code to DS, which generates towards the TV monitor MN a fixed picture i. e. the last picture it has correctly-received. Let us now examine e. g. how the expansion operation of the first 15 points of a line is carried out, the first 5 points being different from the corresponding ones belonging to the same line of the previous frame, and the other ten being equal.

Block AC receives from the channel the line synchronism, followed by 5 elementary items of information with luminance meaning, and then a suitable line code, a part of which has the meaning of transition to a new type of operation, a part concerns the new operation itself and a part contains the number of points involved. This information is parallelized and memorized in AC, as already said, and presented to DL.

DL separates the line synchronism from the luminance information, making them available on different wires of connection 32 (Fig. 4). In addition it reconstructs from the line code the relative reduction code and, separately, the number of points interested in that code (ten in the present example).

The line synchronism present on connection 38 is compared by block CT with the synchronism generated in AS (Fig. 3). The result is made available on connection 40 and, under correct functioning conditions, is interpreted by MT as an assent to the request of a new word from RB.

Said word contains the luminance value of the first point, present on connection 39, and the associated reduction code, present on connection 38. Memory MT, via wire 44 transfers the luminance value at the output of block ES on connection 20, keeping it by an elementary time interval corresponding to a point duration. Said operation is repeated five times, till when MT finds the reduction code, informing it that the further ten points will be equal to the preceding ones.

At the luminance values are stored in the frame memory contained in DS (Fig. 3) it is enough for ES to present for the successive ten time intervals at its output the only reduction code. The luminance information on connection 39 is not examined by block DS, which generates the picture on the basis of the internally-extracted information.

Frhr. Riederer v. Paar, Postfach 2664, D-8300 Landshut

CSELT
Centro Studi e Laboratori
Telecomunicazioni S.p.A.
Via Guglielmo Reiss Romoli, 274

I-10148 Torino

Partner in München:
**DIEHL & KRESSIN**
Dr. H. O. Diehl, Dr. H-R. Kressin
℡ München (089) 177061
Fax (089) 177461 (autom.)
Telex 5215145 Zeus d

"Encoder and Decoder of Variable-Length Messages
for Data Transmission Systems"

Claims

1. A process of encoding and decoding variable-length messages, wherein the encoding is effected on a digital signal having redundancy codes and synchronism signals for driving line-interface circuits (AL), in order to effect the transmission in line code on a digital channel (C) and wherein the decoding is effected on a flow of parallel data blocks obtained from the serial data flow in line code transmitted on the channel, in order to recover the digital signal, the reduction codes and synchronism signals, by effecting suitable tests to check the received-data correctness, characterized in that, during the encoding, by using the reduction codes and the synchronism signals, corresponding signals are generated expressing the type and the quantity of incoming elementary information, comprising the digital signal, the reduction codes, functionning change indicators and information on the data to transmit, an alignment word is added to synchronize the decoder in the operations of acknowledgment of the digital flow received from the channel, afterwards the digital signals, the signals expressing the type and quantity of the elementary information and the alignment words are orderly memorized in the same arrival time sequence and transferred to line interface circuits each time a pre-determined number of them has been reached, forming said messages, and in the decoding, when requested by downstream circuits, a parallel data block is memorized, the block is converted into elementary information arranged in
parallel and ordered as at the arrival, then the digital signal, the
reduction codes and synchronism signals are separated in function
of the kind and order of arrival of the present item of elementary
information and of a number of previous ones, forming the variable-
length message, their temporary memorization is effected to obviate
the time discontinuity of the operations carried out by the upstream
circuits with respect to the operations carried out by downstream
circuits, interrupting the operations if the discontinuity exceeds
a certain pre-determined value, using then the reduction codes
both the digital information and the reduction codes themselves are
expanded and the number of digital signals, obtained after the expansion and comprised between two successive synchronism signals,
is checked to overcome reception errors.

2. Encoder able to realize the process of claim 1, characterized in that
it comprises:

- a first read-only memory (MP), adressed by the reduction codes
  and the synchronism signals and apt to supply the above signals
  expressing the type and quantity of incoming elementary information;

- a first multiplexer (UW), apt to sequentially supply at the output two binary configurations to build up said alignment word;

- a second multiplexer (MW), apt to transfer at the output the
  signals generated by said first read-only memory and the
  digital signals or the alignment word, in function of the synchronism signals;

- an adder (S), apt to add the signal expressing the present quantity of elementary information with that of the immediately preceding time interval;

- a first register (R), apt to store the sum supplied by said adder
  to supply it to an input of the adder itself;

- a third multiplexer (MO), controlled by the signal supplied by
  the first register, which receives at the inputs the signals
  supplied by the second multiplexer;

- a second and a third registers (R1, R2), apt to store the signals supplied by the third multiplexer;

- a first FIFO memory (F), apt to store the signals supplied by the second or third register, as soon as one of said registers has been completely written.

3. Decoder apt to realize the process of claim 1, characterized in that it comprises:

- a fourth register (RA), apt to memorize the above data blocks;

- a first logic circuit (LC), apt to enable the fourth register to the memorization upon a request of the downstream circuits and upon the availability of upstream circuits;

- a serializing circuit (SI), apt to present in sequence at the output a number of data blocks;

- a second read-only memory (MS), addressed by the data supplied by the serializing circuit and by a data block extracted at its output and apt to separately supply the digital signal, the reduction codes, the synchronism and shift command for the serializing circuit;

- a second FIFO memory (MF), apt to store the information present at the output of the second read-only memory;

- a second logic circuit (LF), apt to control the operations of the second FIFO memory in function of the request received from a third read-only memory (MT) and on the availability of information detected at the output of the second read-only memory;

- a fifth register (RB), apt to memorize the information present at the output of the second FIFO memory, upon command of the third read-only memory (MT);

- the third read-only memory (MT), addressed by the signals supplied by the fifth register and by a sixth register (ES), and enabled by a comparator (CT);

- the comparator (CT), apt to compare the synchronism signals received from the channel with locally-generated synchronism signals, to enable the third read-only memory when it finds out the contemporaneity of said signals;

- the sixth register (ES), apt to memorize the digital signals and the reduction codes supplied by the fifth register and to supply them at the output for the time determined by the third read-only memory.

0113446

Fig. 1

Fig. 2

Fig. 3

Fig. 4